(19) Europäisches Patentamt
European Patent Office
Office européen des brevets

(11) EP 2 248 837 B1

# (12) EUROPÄISCHE PATENTSCHRIFT

(45) Veröffentlichungstag und Bekanntmachung des Hinweises auf die Patenterteilung:
**20.03.2013 Patentblatt 2013/12**

(51) Int Cl.:
***C08G 18/28*** *(2006.01)* ***C08G 18/78*** *(2006.01)*
***C08G 18/79*** *(2006.01)* ***C09D 175/04*** *(2006.01)*
***C09J 175/04*** *(2006.01)*

(21) Anmeldenummer: **10401064.0**

(22) Anmeldetag: **29.04.2010**

(54) **Klebstoffe auf Basis silanterminierter Isocyanate**

Adhesives based on silane terminated-isocyanate

Colles à base d'isocyanate à terminaison silane

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.05.2009 DE 102009019899**

(43) Veröffentlichungstag der Anmeldung:
**10.11.2010 Patentblatt 2010/45**

(73) Patentinhaber: **fischerwerke GmbH & Co. KG**
**72178 Waldachtal (DE)**

(72) Erfinder:
- **Grün, Jürgen**
  **79268 Bötzingen (DE)**
- **Vogel, Martin**
  **79286 Glottertal (DE)**
- **Schlenk, Christian**
  **79211 Denzlingen (DE)**
- **Herbstritt, Yvonne**
  **79183 Waldkirch (DE)**

(56) Entgegenhaltungen:
**EP-A2- 2 014 692**
**WO-A1-2005/105939**
**WO-A1-2008/043722**
**DE-A1-102007 013 262**

EP 2 248 837 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft die Verwendung von Kleb- oder Beschichtungsstoffen, insbesondere für Konstruktionszwecke, auf Basis silanterminierter Polymere aus Isocyanaten. Die Kleb- oder Beschichtungsstoffe weisen einen nur geringen oder gar keinen Gehalt an Monomeren oder Molekülen mit freien Isocyanatgruppen auf, wie in den hier durch Bezugnahme inkorporierten Ansprüchen definiert.

Klebstoffe, die DIN EN 204-D4 erfüllen, enthalten in der Regel gesundheitsschädliche Isocyanate und sind daher entsprechend den geltenden Vorschriften zu kennzeichnen. Mitunter führt diese Kennzeichnung zu Vermarktungsbeschränkungen.

Aufgabe der vorliegenden Erfindung ist vor diesem Hintergrund, Kleb- oder Beschichtungsstoffe zu finden, welche günstige toxikologische bzw. arbeitshyglenische Eigenschaften haben und insbesondere auch hohe Adhäsion zu vielen Substraten und eine hohe Witterungsbeständigkeit aufweisen.

Die DE 10 2008 021 221 umfasst theoretisch auch die Reaktion von Isocyanaten mit Silanen, jedoch geht es um ein anderes Ziel: Gute Elastizität und Dehnbarkeit soll erreicht werden, und die Anmeldung ist auf Isocyanatosilane und Polyoxyalkylenglykole als bevorzugte Materialien ausgerichtet.

DE 10 2004 022 150 beschreibt 2-komponentige Massen mit Silanen in beiden Komponenten, wobei konkret nur die Reaktion von Polyethern mit endständigen OH-Gruppen beschrieben wird, auch hier stehen hohe Elastizität und Kitte im Vordergrund.

Die DE 60 2004 012 439 T2 beschreibt in erster Linie Polyoxyethylen-Hydroxide, auch hier geht es wieder um hohe Elastizität und eher Kitte.

Die US 2009/0053411 beschreibt obligatorisch tensidhaltige Zusammensetzungen und hat als Ziel, die Lagerfähigkeit von Organoalkoxysilanen für Adhesionspromotoren zu erhöhen. Es geht um Zusammensetzungen zum Vorimprägnieren von Oberflächen. Es werden nur Epoxidderivate, keine Isocyanat-Derivate, exemplifiziert.

Die WO 2005/105939 beschreibt wegen der Verwendung von epoxy-funktionalen Edukten zwangsläufig OH-gruppenhaltige Silane (z.B. Addukt aus 3-Glycidoxytrimethoxysilan plus Cyclohexansäure) und exemplifiziert einige Beschichtungen damit.

Die EP 2 014 692 beschreibt Allophanat- und Silangruppenhaltige Polyisocyanate, die durch Umsetzung von hydroxylgruppenhaltigen Hydroxysilanen mit Isocyanaten und Allophanatisierung erhalten werden. Als Vergleichsbeispiele werden Umsetzungsprodukte von Aminosilanen und Polyisocyanuraten genannt, um die Viskositäten zu vergleichen, die jedoch nicht selbst als Bestandteile von Klebe- und Beschichtungsstoffen beschrieben werden. Die in den Vergleichsbeispielen genannten Bezugsdokumente WO03/054049 und EP 1 273 640 nennen die resultierenden Verbindungen lediglich als Haftvermittler-Zusätze bzw. als Reaktionspartner für Polyolkomponenten, nicht als Klebe- oder Beschichtungsstoffe als solche.

DE 10 2007 013 262 nennt Umsetzungsprodukte von HDI-Isocyanurat mit N,N-Bis(3-trimethoxysilylpropan-1-yl)amin als Vergleichsbeispiel, jedoch nur als Additive in Anteilen von z.B. 5 % für Kratzfestigkeit und Glanz von Lacken genannt - die eigentlichen Klebe- oder Beschichtungsstoffe sind hier filmbildende Materialien, wie (Meth)acrylate, als Beispiele finden sich Umsetzungsprodukte von Isocyanaten mit "carbinol-funktionellen" Silanen plus Aminosilan, auch wieder nur als Zusätze.

WO 2008/043722 schließlich nennt allophanathaltige Beschichtungsmittel, wobei stets Verbindungen mit radikalisch polymerisierbaren ungesättigten Gruppen als Aufbaukomponenten notwendig und besonders für die (strahlungsinduziertel) Härtung notwendig sind.

Die EP 1 013 686 beschreibt auf der Basis isocyanurat-haltiger Polyisocyanate und Silanaspartate hergestellte Produkte, die nach Wasserzusatz und Säurehydrolyse Dispersionen bilden, die als Beschichtungsmittel exemplifiziert werden.

Die WO 03/054049 zeigt Kleb- oder Dichtstoffe mit einem Anteil von bis maximal 5 % isocyanatreaktiven Silanen als Haftvermittler.

Alkoxysilane mit Aminogruppen werden in einer Reihe von in der EP 0 913 402 genannten Dokumenten beschrieben. Es wird jedoch erwähnt, dass es bekannt ist, dass alle aminofunktionalen Silane extrem reaktiv mit Isocyanaten sind. Daher wird es als schwierig beschrieben, diese Alkoxysilane mit Polyisocyanaten umzusetzen wegen der Inkompatibilität, Inhomogenität und extrem hoher Viskositäten der Reaktionsprodukte.

Es wurde nun jedoch überraschend gefunden, dass die genannten Nachteile bei Durchführung der Umsetzung mit Rohstoffen nach a) und b) wie unten erklärt nicht bestätigt werden können und sogar Kleb- oder Beschichtungsstoffe mit ausgezeichneten Eigenschaften resultieren.

Bei den erfindungsgemäß verwendeten Kleb- oder Beschichtungsstoffen handelt es sich um solche, die auf der Basis von Harzen gebildet sind, die bei der Umsetzung von

a) Silanen, die als Substituenten mindestens einen hydrolysierbaren Rest, insbesondere Alkoxyrest, und mindestens einen Substituenten mit einer gegenüber Isocyanaten reaktiven (funktionalen) Gruppe, ausgewählt aus $-NH_2$ (Ami-

no), -NH- (sek. Amino),-SH (Mercapto), Epoxy, Isocyanato, gamma-Ureido, O-Alkyl-carbamato und/oder Anhydrido aufweisen;

und einer oder mehreren weiteren Komponenten b) ausgewählt aus

b1) aliphatischen (bevorzugt), aromatischen oder araliphatischen Polyisocyanaten mit durch Reaktion von Isocyanatgruppen miteinander gebildeten cyklischen Strukturen , einer Viskosität von höchstens 15000 mPa·s, besonders bevorzugt von höchstens 5000 mPa·s (jeweils bei 23 °C) und einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger;
b2) aliphatischen (bevorzugt), aromatischen oder araliphatischen Polyisocyanaten mit Biuret-, Allophanat- oder Carbodiimid-Typ-Strukturen, einer Viskosität von höchstens 15000 mPa·s, besonders bevorzugt von höchstens 5000 mPa·s bei 23 °C und einem Gehalt an freien monomeren Isocyanaten von 2 oder weniger Gewichtsprozent, vorzugsweise von 0,5 oder weniger Gewichtsprozent; und
b3) Präpolymeren mit einer Viskosität von 60’000 mPa*s oder weniger, bevorzugt von 15’000 oder weniger mPa·s, herstellbar aus der Reaktion von b1) und/oder b2) mit Verbindungen mit mindestens 2 gegenüber Isocyanaten reaktiven Gruppen

erhältlich sind.

Die entstehenden polaren (beispielsweise Polyurethan-, Polythiourethan-, Polyharnstoffund/oder Polythioharnstoff-) Verbindungen sind besonders durch Kettenstabilität, gute Haftung auf polaren Substraten, hohe Festigkeit und geringe Dehnung nach dem Aushärten) gekennzeichnet und ermöglichen somit Verbindungen hoher Stabilität und Festigkeit. Die Dehnung nach dem Aushärten (Restdehnung) liegt vorteilhaft bei kleiner 110 %, z.B. kleiner als 100 %, wie z.B. kleiner als 80% , bestimmt nach der in den Beispielen genannten Methode für die Bruchdehnung.

Vorteilhaft weisen sie eine Molekulargewichtsverteilung derart auf, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind.

Die Erfindung betrifft die Verwendung der erfindungsgemäßen Klebstoffe beim Verkleben insbesondere im Konstruktions- und Baubereich zur (mindestens) stoffschlüssigen Verbindung von zwei oder mehr in Kontakt bringbaren Flächen eines Teils und/oder von zwei oder mehr Teilen zu einem aus den verbundenen Teilen bestehenden Objekt.

Die Erfindung betrifft auch die Verwendung der erfindungsgemäßen Beschichtungsstoffe zur Beschichtung von Substraten, metallischen, organischen oder mineralischen Substraten, insbesondere Substraten im Baubereich, wie Metallen, Mauerwerk, Beton, Keramik, Holz, Kunststoff oder dergleichen. Ferner kann die Verwendung zur Verklebung oder Beschichtung im Bereich der Herstellung von Land-, Wasser- oder Luftfahrzeugen, im Bereich des Sanitärwesens, im Bereich der Elektroindustrie, im Bereich der Herstellung von Produkten mit Kunststoffteilen, und/oder in der Möbelindustrie stattfinden.

Die erfindungsgemäß verwendeten Kleb- oder Beschichtungsstoffe können nach einem Verfahren oder einer Methode zur Herstellung der Kleb- oder Beschichtungsstoffe hergestellt werden, welche durch Umsetzung von

a) Silanen, die als Substituenten mindestens einen hydrolysierbaren Rest, insbesondere Alkoxyrest, und mindestens einen Substituenten mit einer gegenüber Isocyanaten reaktiven (funktionalen) Gruppe, ausgewählt aus $-NH_2$ (Amino), -NH- (sek. Amino),-SH (Mercapto), Epoxy, Isocyanato, gamma-Ureido, O-Alkyl-carbamato und/oder Anhydrido aufweisen;

und einer oder mehreren weiteren Komponenten b) ausgewählt aus

b1) aliphatischen (bevorzugt), aromatischen oder araliphatischen Polyisocyanaten mit durch Reaktion von Isocyanatgruppen miteinander gebildeten cyklischen Strukturen , einer Viskosität von höchstens 15000 mPa·s, besonders bevorzugt von höchstens 5000 mPa·s (jeweils bei 23 °C) und einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger;
b2) aliphatischen (bevorzugt), aromatischen oder araliphatischen Polyisocyanaten mit Biuret-, Allophanat- oder Carbodiimid-Typ-Strukturen, einer Viskosität von höchstens 15000 mPa·s, besonders bevorzugt von höchstens 5000 mPa·s bei 23 °C und einem Gehalt an freien monomeren Isocyanaten von 2 oder weniger Gewichtsprozent, vorzugsweise von 0,5 oder weniger Gewichtsprozent; und
b3) Präpolymeren mit einer Viskosität von 60’000 mPa*s oder weniger, bevorzugt von 15’000 oder weniger mPa·s, herstellbar aus der Reaktion von b1) und/oder b2) mit Verbindungen mit mindestens 2 gegenüber Isocyanaten reaktiven Gruppen;

gekennzeichnet ist.

Die nachfolgenden Definitionen allgemeiner Begriffe ermöglichen die Ersetzung eines oder mehrerer der Begriffe durch die spezifischen Definitionen, was zu bevorzugten Ausführungsformen der Erfindung führt.

Unter Silanen, die als Substituenten mindestens einen hydrolysierbaren Rest und mindestens einen Substituenten mit einer gegenüber Isocyanaten reaktiven Gruppe, ausgewählt aus $-NH_2$ (Amino), -NH- (sek. Amino), -SH (Mercapto), Epoxy, -NCO (Isocyanato) oder Anhydrido, aufweisen, sind alle entsprechenden Silane zu verstehen, die derartige hydroylsierbare Reste, worunter vor- und nachstehend beispielsweise Halogenatome (wie Chloro), Ketoximato, Amino, Aminoxy, Mercapto, Acyloxy, Aryloxy, Aralkyloxy (= Arylalkoxy) oder insbesondere Alkyloxy (Alkoxy) zu verstehen sind, aufweisen, beispielsweise mindestens einen hydrolysierbaren Alkoxyrest und mindestens eine Amino-, sek. Amino-, Mercapto-, Epoxy-, Isocyanato- und/oder Anhydrido-Gruppe tragen, beispielsweise Silane der Formel I,

$$[R_1\text{-}X\text{-}(CH_2)_n\text{-}]_p\text{-}Si(\text{-}R_2)_q \qquad (I)$$

worin

X für S oder NH oder O oder NCO oder nichts steht; wobei X nichts ist, wenn $R_1$ für Carbonsäureanhydrid steht;

$R_1$ für nichts, Wasserstoff, Cycloalkyl, Alkyl, Aminoalkyl, Epoxyalkyl, Aryl, Acyl, Carbonsäureanhydrid, Heterocyclyl oder einen Rest der Formel $-[(CH_2)_{n^*}]_{p^*}\text{-}Si(OR_2{}^*)_{q^*}$ steht, worin, jeweils unabhängig vom anderen Rest, $R_2{}^*$ eine der für $R_2$, genannten Bedeutungen hat; wobei $R_1$ Wasserstoff ist, wenn X für S steht; wobei $R_1$ Epoxyalkyl ist, wenn X für O steht; wobei $R_1$ nichts ist, wenn X für NCO steht;

$R_2$ für Alkyl oder für einen hydrolysierbaren Rest, insbesondere Alkoxy, steht, mit der Maßgabe, dass mindestens einer, vorzugsweise zwei oder drei, der Reste $R_2$ für (unabhängig voneinander auswählbare oder identische) hydrolysierbare Reste, beispielsweise für Alkoxy steht, bzw. stehen;

n und n* unabhängig voneinander für eine positive ganze Zahl, insbesondere 1 bis 10, stehen;

p und p* unabhängig voneinander für 1 bis 3 stehen; und

q und q* unabhängig voneinander für 1 bis 3 stehen, mit der Maßgabe, dass die Summe aus p bzw p* und q bzw. q* gleich 4 ist.

Besonders vorteilhaft können hierbei solche Silane verwendet werden, die den alpha-Effekt zeigen, also z.B. worin n und gegebenenfalls n* in obiger Formel I gleich 1 ist (n = 1 und ggf. n* = 1 in Formel I), z.B. N-Cyclohexylaminomethyl-methyldiethoxysilan, N-Cyclohexylaminomethyl-trimethoxysilan, Phenylaminomethyl-trimethoxysilan, Phenylaminomethyl-methyldi- methoxysilan, N-Trimethoxysilylmethyl-O-methylcarbamat, N-Dimethoxy-(methyl)silylmethyl-O-methyl-carbamat, (Isocyariatomethyl)methyldimethoxysilan. Unter dem alphä-Effekt ist die Wechselwirkung zwischen Silicium und einer geminalen (z.B. über einen Kohlenstoff beispielsweise eine Methylengruppe gebundenen) Donorgruppe (z.B. Amino, sek-Amino oder Mercapto (Sulfanyl)) zu verstehen, der eine erhöhte Reaktivität der Silane und damit deren beschleunigte Härtung unterstützt.

Bei den Silanen, die als Substituenten mindestens einen hydrolysierbaren Rest und mindestens einen Substituenten mit einer gegenüber Isocyanaten reaktiven Gruppe aufweisen, können solche bevorzugt sein, die mindestens auch eine andere als Amino- oder sek-Amino-gruppen als gegenüber Isocyanaten reaktive Gruppen enthalten, insbesondere solche, welche die genannten gegenüber Isocyanaten reaktiven Gruppen außer Amino- oder sekundären Aminogruppen enthalten. Diese Varianten gelten insbesondere für die Kleb- und Beschichtungsstoffe als solche oder deren Verwendung zum Kleben, zum Beschichten oder zum Kleben und Beschichten. Andere bevorzugte Varianten können als Silane, die als Substituenten mindestens einen hydrolysierbaren Rest und mindestens einen Substituenten mit einer gegenüber Isocyanaten reaktive Gruppe aufweisen, solche beinhalten, die mindestens auch eine andere Gruppe als Mercapto als gegenüber Isocyanaten reaktive Gruppen enthalten, insbesondere solche, welche die genannten gegenüber Isocyanaten reaktiven Gruppen außer Mercapto enthalten.

Bei den Herstellungsverfahren können alle genannten Silane, die als Substituenten mindestens einen hydrolysierbaren Rest und mindestens einen Substituenten mit einer gegenüber Isocyanaten reaktiven Gruppe aufweisen, verwendet werden, insbesondere Amino- oder sek.-Amino- oder Mercaptogruppen, letztere auch bei den erfindungsgemäßen Verwendungen.

Alkyl steht innerhalb dieser Offenbarung stets für insbesondere einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl.

Cycloalkyl steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Aminoalkyl steht vorzugsweise für Alkyl wie oben definiert, das durch Amino substituiert ist, z.B. für 2-Aminoethyl, 3-Aminopropyl oder dergleichen.

Epoxyalkyl steht vorzugsweise für Alkyl wie oben definiert, das durch eine Epoxygruppe unter Ringbildung substituiert ist, wie insbesondere(2,3-Epoxy-propan-1-yl).

Aryl steht für einen mono-, di- oder trizyklischen, vorzugsweise monozyklischen, ungesättigten cyclischen Kohlenwasserstoffrest, wie insbesondere für Phenyl oder Naphthyl, wobei Aryl unsubstituiert oder substituiert sein kann, beispielsweise durch ein oder mehrere, z.B. bis zu drei, $C_1$-$C_7$-Alkylreste.

Acyl steht für einen über die Carbonylgruppe gebundenen Rest einer organischen Carbonsäure, beispielsweise einen Alkanoylrest, wie $C_2$-$C_7$-Alkanoyl, oder insbesondere einen $C_1$-$C_7$-Alkoxycarbonylrest, wie Methoxycarbonyl (Me-O-C(=O)-)

Heterocyclyl bedeutet insbesondere einen mono- di- oder trizyklischen, insbesondere monozyklischen Rest mit 3 bis 20, vorzugsweise 3 bis 8 Ringatomen, von denen ein oder mehrere , insbesondere 2, als Heteroatome unabhängig voneinander ausgewählt aus N, O und S vorliegen, und kann durch ein oder mehrere Oxogruppen substituiert sein, insbesondere solche, die an Ringkohlenstoffatome gebunden sind, die über ein O-Heteroatom gebunden sind (was zu Anhydrido führt). Unter Heterocyclyl fällt somit insbesondere auch Anhydrido, bei dem es sich um einen cyclischen Rest handelt, der folgendes ringschließendes Brückenelement enthält: -C(=O)-O-C(=O)-. Der Ring beinhaltet also eine Carbonsäureanhydridgruppe. Ein mögliches bevorzugtes Beispiel ist 2,5-Dioxo-oxolan-3-yl, ein anderes die entsprechende ungesättigte Variante 2,5-Dioxo-oxol- -3-yl mit Doppelbindung zwischen den C-Atomen in Stellung 3 und 4 des Rings, ein weiteres ein in 3,4-Stellung benzoannelierter 2,5-Dioxolan-3-ylrest.

Unter Isocyanato oder Isocyanatgruppe ist -N=C=O zu verstehen.

Dass "X für nichts" steht oder X nichts ist oder dergleichen, bedeutet, dass der Rest "-X-" in der jeweiligen Formel für eine einfache Bindung steht. Dass $R_1$ nichts ist, bedeutet, dass der Rest $R_1$ fehlt.

Ketoximato bedeutet insbesondere einen (hier über die mit Sternchen * markierte Bindung an Si gebundenen) Rest der Formel

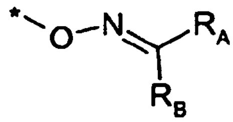

worin $R_A$ und $R_A$ unabhängig voneinander für Alkyl, insbesondere $C_1$-$C_7$-alkyl, stehen, welches verzweigt oder unverzweigt sein kann, wie z.B. Methyl, Ethyl oder Isobutyl.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Die Komponenten b) sind wie folgt definierbar:

Aliphatisch (z.B. Alkyl) bedeutet, dass die entsprechenden Polyisocyanate gesättigte Kohlenwasserstoffketten mit 1 bis 20, vorzugsweise 1 bis 10, Kohlenstoffatomen, die geradkettig und/oder verzweigtkettig sein können, wie Hexamethylen oder Heptamethylen, oder gesättigte cyclische Reste, die mit ein oder mehreren ggf. weiter substituierten Alkylgruppen substituiert sein können, wie Isophoronylen (1,1,3,3-tetramethylcyclohexanylen) oder Dicyclohexylmethylen, enthalten. Diese tragen die durch Reaktion von Isocyanatgruppen miteinander gebildeten ein oder mehreren cyklischen Strukturen, wie die des Uretdion-Typs, des Isocyanurat-Typs, des Iminooxadiazinon-Typs oder des Uretonimin-Typs, oder nichtzyklische Gruppen des Biurettyps oder des Allophanattyps; oder zwei oder mehr unterschiedliche derartige Gruppen, und ein oder vorzugsweise mehrere noch verbleibende nicht umgesetzte Isocyanatgruppen.

Aromatisch (z.B. Aryl) bedeutet vorzugsweise, dass die entsprechenden Polyisocyanate aromatische Reste mit 6 bis 18 Kohlenstoffatomen enthalten, wie Phenylen, Naphthylen, die mit ein oder mehreren, gegebenenfalls auch verbrückenden Alkylsubstituenten, wie ein oder mehreren Methylgruppen, substituiert sein können, z. B. Toluylen oder Methyldiphenylen. Diese tragen die durch Reaktion von Isocyanatgruppen miteinander gebildeten cyklischen Strukturen, wie die des Uretdion-Typs, des Isocyanurat-Typs, des Uretonimin-Typs oder des Iminooxadiazinontyps, oder nichtzyklische Gruppen des Biurettyps oder des Allophanattyps, oder zwei oder mehr unterschiedliche derartige Gruppen, und ein oder vorzugsweise mehrere noch verbleibende nicht umgesetzte Isocyanatgruppen.

Aromatisch-aliphatisch (z.B. Aralkyl; weniger bevorzugt als Bedeutung) bedeutet vorzugsweise, dass die entsprechenden Reste Kombinationen aus aliphatischen Resten und aromatischen Resten, wie vorstehend genannt, enthalten. Diese tragen die durch Reaktion von Isocyanatgruppen miteinander gebildeten cyklischen Strukturen, wie die des Uretdion-Typs, des Isocyanurat-Typs, des Uretonimin-Typs oder des Iminooxadiazinontyps, oder ferner des Oxadiazintriontyps, oder nichtzyklische Gruppen des Biurettyps oder des Allophanattyps oder ferner des Carbodiimidtyps, oder zwei oder mehr unterschiedliche derartige Gruppen, und ein oder vorzugsweise mehrere noch verbleibende nicht umgesetzte Isocyanatgruppen

Unter aliphatischen (bevorzugt), aromatischen oder araliphatischen Polyisocyanaten mit cyklischen Strukturen

sind insbesondere solche zu verstehen, die beispielsweise aus der Umsetzung von mindestens einem Teil der Isocyanatgruppen entsprechender Isocyanatgruppen tragender Monomere erhältliche zyklische Strukturen, wie z.B. des Uretdion-Typs, des Isocyanurat-Typs, des Iminooxadiazindion-Typs und/oder des Uretonimin-Typs, und/oder ferner des Oxadiazintriontyps, beinhalten.

Uretdion-Typ-Strukturen beinhalten Gruppen (oder bestehen insbesondere aus Verbindungen) der Formel A

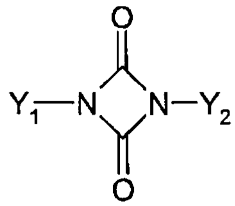

(A)

worin $Y_1$ und $Y_2$ unabhängig voneinander aus Alkyl, Aryl oder Alkylaryl ausgewählt sein können, wobei mindestens einer oder alle dieser Reste durch mindestens eine freie Isocyanatgruppe substituiert sind, wobei ein Teil der Isocyanatgruppen erneut Bestandteil von entsprechenden Uretdion-Typ- oder weiteren gegebenenfalls auch durch Nebenreaktionen entstehenden Strukturen sein können, also pro Molekül mehrere solcher Gruppen, beispielsweise bis zu zehn, vorkommen können, so dass insgesamt mindestens eine oder vorzugsweise zwei, oder mehr, freie Isocyanatgruppen je Molekül der Formel A verbleiben.

Isocyanurat-Typ-Strukturen beinhalten Strukturen des Typs (oder bestehen insbesondere aus Verbindungen) der Formel B

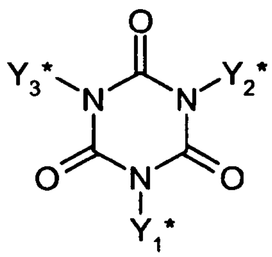

, (B)

worin $Y_1$*, $Y_2$* und $Y_3$* unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel B mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel B verbleiben.

Iminooxadiazindion-Typ-Strukturen beinhalten Strukturen des Typs (oder bestehen insbesondere aus Verbindungen) der Formel C

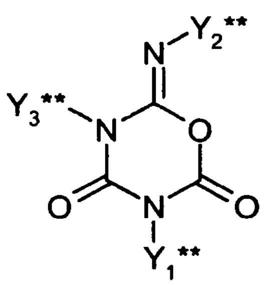

(C)

worin $Y_1$**, $Y_2$** und $Y_3$** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Iminooxadiazindion-Typ- oder weiteren gegebenenfalls auch durch Nebenreaktionen entstehenden Strukturen sein können, also pro Molekül der Formel C mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel C verbleiben.

Uretonimin-Typ-Strukturen beinhalten Strukturen des Typs (oder bestehen insbesondere aus Verbindungen) der Formel D

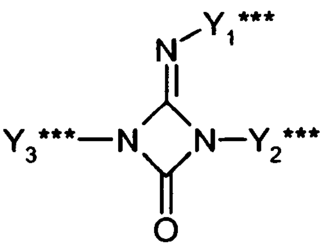

, (D)

worin $Y_1$***, $Y_2$*** und $Y_3$*** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel D mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel D verbleiben.

Oxadiazintrion-Typ-Strukturen beinhalten Strukturen des Typs (oder bestehen insbesondere aus Verbindungen) der Formel G,

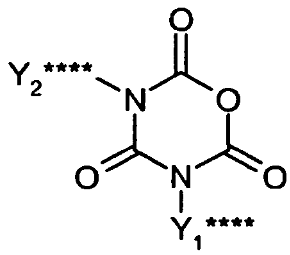

(G)

worin $Y_1$**** und $Y_2$**** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel G mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel G verbleiben.

Aryl ist innerhalb dieser Offenbarung stets vorzugsweise ein aromatischer Rest mit 6 bis 18 Kohlenstoffatomen, beispielsweise Phenyl, Naphthyl, Toluyl oder Methyldiphenyl.

Aralkyl ist innerhalb dieser Offenbarung stets Aryl wie zuvor definiert, welches an Alkyl wie vorstehend definiert gebunden ist, beispielsweise Benzyl oder Phenylethyl, kann aber bei für Ausführungsformen der Erfindung innerhalb dieser Offenbarung weggelassen werden.

Viskositäten werden nach DIN EN ISO 2555 mit einem Brookfield DV-III+-Viskosimeter mit Spindel 3 bei 10 Umdrehungen/Minute (U/min) bei 23 °C gemessen und in Pa·s (nachfolgend auch als Pa * s oder Pas wiedergegeben) angegeben.

Die Bestimmung des NCO-Gehaltes eines Isocyanates erfolgt durch Reaktion eines Überschusses an Dibutylamin mit dem Isocyanat, gefolgt von einer Rücktitration des überschüssigen Amins mit Chlorwasserstoffsäure (HCl), nach der Formel:

$$\%NCO = (42{,}02\ g/mol \cdot [\text{Äquivalente an } Bu_2NH \text{ verbraucht}]/[\text{Gewicht der Probe}]) \cdot 100$$

Beispielsweise kann diese Messung nach Siggia, S. and J. G. Hanna. 1948. Anal. Chem., 20:1084, oder nach der nicht verbindlich gewordenen Methode nach ASTM D4666-87, "Standard Test Method for Polyurethane Raw Materials: Determination of Amine Equivalent of Crude or Modified Isocyanates", durchgeführt werden.

Unter aliphatischen (bevorzugt), aromatischen oder araliphatischen Polyisocyanaten mit Biuret- oder Allophanat-Strukturen oder ferner Carbodiimid-Strukturen (acyclischen Strukturen) sind insbesondere solche zu verstehen, die beispielsweise aus der Umsetzung von mindestens einem Teil der Isocyanatgruppen erhältliche entsprechende acyclische Strukturen beinhalten.

Biuret-Typ-Strukturen beinhalten Strukturen des Typs (oder bestehen insbesondere aus Verbindungen) der Formel E

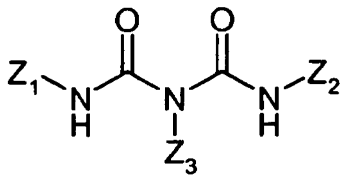

(E)

worin $Z_1$, $Z_2$ und $Z_3$ unabhängig voneinander aus Alkyl, Aryl oder Alkylaryl ausgewählt sein können, wobei mindestens einer oder vorzugsweise zwei oder alle dieser Reste durch mindestens eine Isocyanatgruppe substituiert sind, wobei Isocyanatgruppen erneut Bestandteil von entsprechenden Biuret-Typ- oder weiteren gegebenenfalls auch durch Nebenreaktionen entstehenden Strukturen sein können, also pro Molekül mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel E verbleiben.

Allophanat-Typ-Strukturen beinhalten Strukturen des Typs (oder bestehen insbesondere aus Verbindungen) der Formel F

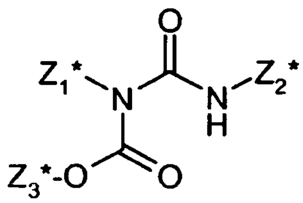

(F)

worin $Z_1^*$, $Z_2^*$ und $Z_3^*$ unabhängig voneinander aus Alkyl, Aryl oder Alkylaryl ausgewählt sein können, wobei mindestens einer oder vorzugsweise zwei dieser Reste durch eine Isocyanatgruppe substituiert sind, wobei Isocyanatgruppen erneut Bestandteil von entsprechenden Allophanat-Typ- oder weiteren gegebenenfalls auch durch Nebenreaktionen entstehenden Strukturen sein können, also pro Molekül der Formel F mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel F verbleiben.

Carbodiimid-Typ-Strukturen beinhalten Strukturen des Typs (oder bestehen insbesondere aus Verbindungen) der Formel H

$Z_1^{**}\text{-}N{=}C{=}N\text{-}Z_2^{**}$ (H)

worin $Z_1^{**}$ und $Z_2^{**}$ unabhängig voneinander aus Alkyl, Aryl oder Alkylaryl ausgewählt sein können, wobei mindestens einer oder vorzugsweise zwei dieser Reste durch eine Isocyanatgruppe substituiert sind, wobei Isocyanatgruppen erneut Bestandteil von entsprechenden Allophanat-Typ- oder weiteren gegebenenfalls auch durch Nebenreaktionen entstehenden Strukturen sein können, also pro Molekül der Formel H mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel H verbleiben.

Entsprechende Verbindungen des Typs b1) (wie z.B. HDI-Isocyanurat, die entsprechenden Pentamere, IPDI-Trimere oder HDI- oder IPDI-Iminooxadiazindione, Uretonimine oder jeweils höhere Polymere davon) oder b2) (wie z.B. HDI-Biuret oder HDI-Uretdion, oder jeweils höhere Polymere davon) sind bekannt oder nach bekannten Verfahren herstellbar, beispielsweise wie in der EP 0 000 194, der EP 0 531 820, DE 2 616 416, EP 0 010 589, US 3,124,605, US 3,358,010, US 3,644,490, US 3,769,318, US 4,160,080, US 4,177,342, US 5,124,427, US 5,208,334, US 5,235,018 oder dergleichen.

HDI steht für Hexamethylendiisocyanat, IPDI für Isophorondiisocyanat.

Besonders bevorzugt sind $C_1$-$C_{10}$-Methylendiisocyanate, z. B. Hexamethylendiisocyanat, die cyklische Strukturen (b1)) oder insbesondere Biuret- und/oder Allophanat-Strukturen beinhalten.

Geeignete Ausgangsmaterialien für die Komponenten b1) und b2) sind beispielsweise Diisocyanatodiphenylmethan und seine Strukturisomere, Polymeren und Homologen, Toluoldiisocyanat und seine Strukturisomeren, Polymeren und Homologen 1,6-Hexamethylendiisocyanat, 1-Isocyanato-3,3,5-trimethyl-5-isocyanatomethylcyclohexan (Isophorondiisocyanat) und Diisocyanato-dicyclohexylmethan und seine Strukturisomeren, Polymeren und Homologen, sowie deren Mischungen.

Unter Strukturisomeren sind insbesondere Stellungsisomere zu verstehen, unter Polymeren oder Homologen z.B. Präpolymeren auf deren Basis.

Wo die Rede von "weiteren ggf. auch durch Nebenreaktionen entstehenden Strukturen" ist, bezieht sich das auf andere als die jeweils genannten Isocyanat-Reaktionsprodukte, wie unvollständige Reaktionsprodukte oder jeweils aus anderen der genannten Gruppen stammende Strukturen. Derartige Nebenprodukte können oft nicht vermieden werden und können beispielsweise in einem Anteil von bis zu 50, z.B. bis zu 40, Prozent der Zahl aller umgesetzten Isocyanatgruppen vorhanden sein.

Wo die Rede davon ist, dass "Isocyanatgruppen erneut Bestandteil" sein können von Uretdion-, Isocyanurat-, Iminooxadiazindion-, Uretonimin-, Oxadiazintrion-, Biuret-, Allophanat- oder CarbodiimidTyp-Strukturen oder weiteren gegebenenfalls durch Nebenreaktionen entstehenden Strukturen bedeutet dies, dass die Isocyanatgruppen in nach entsprechender Reaktion abgewandelter Form vorliegen können (dann also nicht mehr als Isocyanatgruppen als solche).

Bei den Varianten b1 und b2 insbesondere des erfindungsgemäßen Verfahrens können beispielsweise bei Verwendung von Verbindungen mit Biuret- und oder Isocyanurat-Typ-Strukturen auch ein oder mehrere andere der oben und unten genannten Verbindungen mit Isocyanat-gruppen in abgewandelter Form zugemischt sein, oder es werden nur andere der genannten als Verbindungen mit Biuret- und oder Isocyanurat-Typ-Strukturen eingesetzt.

Bei den unter b3) fallenden Präpolymeren mit einer Viskosität von 60'000 oder weniger mPas, herstellbar aus der Reaktion von b1) und/oder b2) mit Verbindungen mit mindestens 2 gegenüber Isocyanaten reaktiven Gruppen, handelt es sich um entsprechende Präpolymere, die durch Umsetzung unter zur Herstellung von Präpolymeren aus den Isocyanaten als solchen üblichen Bedingungen herstellbar sind.

Entsprechende Verbindungen mit mindestens zwei gegenüber Isocyanaten reaktiven Gruppen sind insbesondere di- oder höherfunktionale (aliphatische, aromatische oder araliphatische) Verbindungen mit zwei oder mehr Gruppen ausgewählt aus Amino, Imino, Hydroxy und Mercapto, beispielsweise entsprechende Alkohole, Thiole, Amine, Thioalkohole, Aminoalkohole oder Aminothiole, oder Gemische davon, beispielsweise wie in WO 02/079341 und WO 02/079293 genannt, welche hier diesbezüglich durch Bezugnahme aufgenommen werden. Beispiele für entsprechende Verbindungen sind Folgeprodukte des Ethylen- oder Propylenoxids, wie Ethandiol, andere Diole, wie Butandiol, Bisphenol A oder Bisphenol F, höherwertige Alkohole, wie z.B. Glycerin oder Trimethylolpropan, hydroxylgruppenhaltige Polyether, z.B. Polyethylenoxid, Polypropylenoxid, oder Polytetrahydrofuran, Polyether mit jeweils endständigem Hydroxy, die in der Hauptkette aromatische Struktureinheiten enthalten, hydroxylgruppenhaltige Polyester,
oder insbesondere Polyether mit jeweils endständigem Amino ("Jeff-Amine" = Polyoxyalkylenamine, was zur Entstehung entsprechender Harnstoffderivate führt), aliphatische Aminole, insbesondere Hydroxyniederalkylamine, wie Ethanolamin, Diethanolamin oder 3-Aminopropanol, oder aromatische Aminole, wie 2-, 3- oder 4-Aminophenol, anorganische oder organische Aminoverbindungen mit 2 oder mehr Aminogruppen, wie Hydrazin oder Ethylendiamin oder insbesondere sterisch gehinderte, sekundäre aliphatische Diamine wie N,N'-Di-tert.-butylethylendiamin, oder aromatische Di- oder Polyamine, wie 2,4- und 2,6-Toluoldiamin oder 4,4'-Diaminodiphenylmethan, Polyetherdiamine oder Polyphenyl/Polymethylen-polyamine, die durch Kondensation von Anilinen mit Formaldehyd erhältlich sind, oder Insbesondere sterisch gehinderte aromatische Diamine (wie Ethacure® (Albemarle Corp., Baton Rouge, Louisiana, USA) oder Lonzacure® (Lonza Group Ltd., Basel, Schweiz) oder sterisch gehinderte, sekundäre aromatische Diamine (wie Unilink®, UOP, Des Plaines, Illinois, USA). Es können auch Mischungen von zwei oder mehr der genannten jeweils di- oder höherfunktionalen Alkohole, oder insbesondere Aminoalkohole oder Amine vorliegen, oder Thioanaloge (mit Mercaptogruppen statt Amino und/oder Hydroxy) der genannten Verbindungen.

Bevorzugt sind solche der genannten Präpolymeren, bei deren Herstellung außer Polyethern als im letzten Absatz genannte Verbindungen mit mindestens zwei gegenüber Isocyanaten reaktiven Gruppen mindestens eine der anderen In diesem Absatz genannten Verbindungen mit solchen reaktiven Gruppen beinhalten, insbesondere Präpolymeren, bei deren Herstellung keine Polyether verwendet wurden, oder solche, bei denen mindestens auch (zu Harnstoffen führende) ein oder mehrere Aminogruppen tragen. Dies ermöglicht eine besonders geringe Verformbarkeit, die für festes Kleben vorteilhaft ist. Auch die entsprechenden erfindungsgemäßen Verfahren und Verwendungen stellen besondere Ausführungsformen der Erfindung dar.

Aliphatische (bevorzugt), aromatische oder araliphatische Polyisocyanate mit cyklischen Strukturen und aliphatische (bevorzugt), aromatische oder araliphatische Polyisocyanate mit Biuret-, Allophanat- oder ferner Carbodiimid-Strukturen (acyclische Strukturen) können in der vorliegenden Offenbarung auch als Verbindungen mit Isocyanat-gruppen in abgewandelter Form bezeichnet werden.

Unter einem Klebstoff ist im Rahmen der vorliegenden Offenbarung ein Material zu verstehen, das nach dem Aushärten das stoffschlüssige Verbinden von Oberflächen von Objekten ermöglicht, sei des innerhalb eines Objekts oder vorzugsweise zum Verbinden von zwei Objekten.

"Auf Basis" bedeutet, dass die erfindungsgemäß verwendeten Klebstoffe neben den genannten Komponenten a) und b) auch weitere übliche Inhaltsstoffe (Zusätze oder Zusatzstoffe) beinhalten, wie Silan-Vernetzer, Ester der Polykieselsäure (wie z.B. Dynasilan 40), Haftvermittler, wie z.B. Aminosilane, Thixotropiermittel, wie pyrogene Kieselsäure, Pigmente, Farbstoffe, Hilfsstoffe, Lösemittel wie z.B. Aceton, oder Toluol, Phthalsäureester oder Paraffine, Stabilisatoren (z.B. gegen Oxidation, UV-Licht oder Licht), Antistatikmittel, Verdickungsmittel oder dergleichen Additive enthalten, oder Gemische von zwei oder mehr davon, vorzugsweise (insbesondere bei primären oder sekundären Aminosilanen oder Mercaptosilanen und Biureten oder Isocyanuraten als Edukten) ohne Tenside. Diese weiteren Inhaltsstoffe können beispielsweise in einer Menge von insgesamt bis zu 80, vorzugsweise zwischen 0,01 und 50 Gew.-%, vorliegen.

Als Katalysator können übliche Katalysatoren in dem Fachmann bekannter Menge zugesetzt werden, wie z.B. Blei, Kobalt-, Eisen, Nickel, Zink- oder insbesondere Zinnsalze von organischen Carboxylsäuren, wie Fettsäuren, wie Zinnoctanoat, Zinnaphthenat oder Zinn-Acetat, Zinnalkoxylate oder Dialkylzinn-Dicarboxylate, wie Dibutylzinn-dilaurat, Dibutylzinn-dipalmitat, Dibutylzinn-distearat, Dibutylzinn-diacetat oder Dibutylzinnacetylacetonat, Titansäureester, wie Tetrabutyltitanat oder Tetrapropyltitanat, oder (beispielsweise sekundäre oder tertäre) Amine, wie Ethylamine, Morpholin, n-Methylmorpholin, 2-Ethyl-2-Methylimidazol, 1,8-Diazabicycli(5.4.0)undecen-7, Pyridin, Carboxylsäuresalze solcher Amine oder langkettige aliphatische Amine, oder Gemische von zwei oder mehr davon, wobei die Gesamtmenge an Katalysator, bezogen auf den fertigen Klebstoff, beispielsweise bei 0,001 bis 5 Gew.-% liegen kann, z.B. bei 0,005 bis 0,5 Gew.-%.

Als weitere Zusätze kommen insbesondere Füllstoffe zum Einsatz, vorzugsweise mineralische oder mineralähnliche Füllstoffe, wie Quarz, Glas, Porzellan, Korund, Keramik, Talkum, Kieselsäure (z.B. pyrogene Kieselsäure), Silikate, Ton, Titandioxid, Kreide, Schwerspat, Feldspat, Basalt, Aluminiumhydroxid, Granit oder Sandstein, polymere Füllstoffe, , hydraulisch härtbare Füllstoffe, wie Gips, Branntkalk oder Zement (z.B. Tonerd- oder Portlandzement), Wassergläser, aktive Aluminiumhydroxide, Metalle, wie Aluminium, Ruß, ferner Holz, mineralische oder organische Fasern, oder dergleichen, oder Gemische von zwei oder mehr davon. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform, und die entsprechenden Grundteilchen haben vorzugsweise einen maximalen Durchmesser von 0,001 $\mu$m bis 10 mm. Füllstoffe liegen bezogen auf die fertige Mischung (Klebstoff) vorzugsweise in einer Menge von bis zu 90, insbesondere 3 bis 85, beispielsweise 5 bis 70 Gew.-% vor.

Die Herstellung eines Klebstoffes erfolgt vorzugsweise durch Umsetzung der Komponenten a) und b) nach Vermischen der Komponenten, erforderlichenfalls in Gegenwart eines Lösungsmittels ohne aktiven Wasserstoff (wie z.B. in SH, NH oder OH), vorzugsweise jedoch ohne Lösungsmittel, bei üblichen Temperaturen beispielsweise im Bereich zwischen 0 °C und der durch die Reaktionswärme entstehenden Temperatur, beispielsweise zwischen 20 und 150 °C oder gegebenenfalls bei höheren Temperaturen durch Erwärmen gegebenenfalls unter gleichzeitiger oder vorzugsweise anschließender Vermischung mit ein oder mehreren weiteren Inhaltsstoffen. Eventuell kann ein Katalysatorzusatz zur ausreichenden Beschleunigung der Reaktion erfolgen, wobei die Aktivierung beispielsweise mit einem oder mehreren der oben genannten Katalysatoren erfolgen kann.

Vorzugsweise liegt dabei das molare Verhältnis der miteinander umzusetzenden funktionellen Gruppen (z.B. X in Formel I) des Silans (Komponente a)) zu denen der Isocyanatderivate (Isocyanatgruppen) (Komponente b)) im Bereich von 1 : 5 bis 5 : 1, besonders bevorzugt im Bereich von 1:2 bis 2:1. Überschüssiges Silan kann dabei als Reaktivverdünner und/oder Vernetzer in der endgültigen Zusammensetzung dienen. Überschüssige Isocyanat-Gruppen können der Haftvermittlung oder der Erzeugung von Schaumstrukturen dienen.

Das derart erhältliche Produkt ist ein erfindungsgemäß zu verwendender Kleb- oder Beschichtungsstoff.

in einer möglichen bevorzugten Ausführungsform sind die erfindungsgemäß verwendbaren Klebstoffe als Ein-Komponenten-Kleber vorgesehen und werden somit auch als solche verwendet- die Aushärtung erfolgt dann vor allem durch die Umgebungsfeuchtigkeit (z.B. aus Luft und/oder den zu verklebenden Materialien).

Alternativ ist die Ausführung als Zwel-Komponenten-System möglich, derart, dass Wasser und Silane in getrennten Komponenten vorliegen, wobei vorzugsweise die erste Komponente den Klebstoff (beispielsweise zusammengesetzt wie für ein einkomponentiges System), die zweite Komponente Wasser, insbesondere in Pasten- oder Gelform (beispielsweise gebunden an einen Binder, wie Kieselgel oder dergleichen) gebunden, enthält, das dann die Aushärtung ermöglicht.

Bei Zweikomponentensystemen können die beiden Komponenten Klebstoff und Wasser (insbesondere in Pasten- oder Gelform) in getrennten Behältnissen eines Gebindes vorhanden sein und (beispielsweise durch Rühren) miteinander verbunden werden, oder vorzugsweise in einer Zwei-Kammer-Kartusche oder einer entsprechenden Vorrichtung, die vorteilhaft mit einem Statikmischer ausgestattet sein kann, so dass die Vermischung direkt vor Ort erfolgt und die Aushärtung damit beginnt.

Die Erfindung betrifft auch die Verwendung der Klebstoffe beim Verkleben insbesondere im Konstruktions- oder Baubereich zur (mindestens) stoffschlüssigen Verbindung von zwei oder mehr in Kontakt bringbaren Flächen eines Teils und/oder von zwei oder mehr Teilen zu einem aus den verbundenen Teilen bestehenden Objekt.

Zum Konstruktionsbereich gehört beispielsweise der Einsatz zum Verkleben im Bereich der Herstellung von Land-, Wasser- oder Luftfahrzeugen, wie in der Automobilindustrie, im Bereich des Sanitärwesens, im Bereich der Elektroindustrie, im Bereich der Herstellung von Produkten mit Kunststoffteilen, in der Möbelindustrie und vielen anderen Bereichen.

Im Baubereich gehört beispielsweise der Einsatz zum Verkleben von Böden, Rohren, Platten, Steinen, Holzbauteilen (hier ist die Realisierbarkeit der Belastungsgruppe D4 nach DIN EN 204 mit erfindungsgemäßen Klebstoffen hervorzuheben) und dergleichen (beispielsweise zur Befestigung von Platten an Fassaden oder dergleichen) zu den erfindungsgemäßen Verwendungen.

Bei der Verwendung wird jeweils eine Oberfläche eines zu behandelnden (verklebenden) Objekts mindestens teilweise mit dem Klebstoff beaufschlagt und dann mit einer anderen Oberfläche (die auch mit erfindungegemäßem Klebstoff beaufschlagt sein kann) desselben oder eine anderen Objektes in Verbindung gebracht. Nach dem Aushärten (durch Luftfeuchtigkeit, Feuchtigkeit in den Objekten und/oder zugesetztes Wasser (letzteres im Fall eines Zwei-Komponenten-Systems), sind die Oberflächen mindestens stoffschlüssig miteinander verbunden (daneben können andere Verbindungsmechanismen wie Formund/oder Kraftschluss an der Verbindung beteiligt sein).

Bevorzugte Ausführungsformen der Erfindung finden sich in den Beispielen, wie auch in den Ansprüchen (Insbesondere den Unteransprüchen), die hier durch Bezugnahme aufgenommen werden, wobei ebenfalls die oben genannten Definitionen zur Präzisierung von ein oder mehreren der in den Ansprüchen genannten Merkmalen dienen können, was zu weiteren Ausführungsformen der Erfindung führt.

Die nachfolgenden Beispiele dienen der Illustration der Erfindung, ohne ihren Umfang einzuschränken.

**<u>Beispiel 1: Kennzeichnungsarmer Konstruktionsklebstoff:</u>**

Es wird ein Konstruktionsklebstoff aus einem silanterminierten Präpolymeren und weiteren Zusätzen hergestellt.

Eingesetzte Materialien:

| | | |
|---|---|---|
| Dynasylan® AMEO | Evonik Industries[1] | 3-Aminopropyltriethoxysilan |
| Vestanat® HB 2640 LV | Evonik Industries[1] | Hexamethylen-1,6-diisocyanat, mit Biuret-Strukturen |
| Calcilit® 6 HS | Alpha Calcit[2] | Kreide (Füllstoff) |
| Dabco T9 | Air Products[3] | Katalysator (Zinnoctanoat) |

Herstellung des Präpolymers:

Dynasilan AMEO und Vestanat HB 2540 LV werden zur Herstellung eines silanterminierten Präpolymers umgesetzt. Es wird ein Präpolymer mit einem Verhältnis der funktionellen Gruppen des Isocyanats (Isocyanat-Äquivalente) zu denen des Aminosilans (Amino-Äquivalente) von 1:1,54 hergestellt. Dazu werden 55,83 g Dynasylan AMEO eingewogen. Im Anschluss werden 30 g Vestanat HB 2640 LV derart zugegeben und untergerührt, dass die Temperatur kontrolliert werden kann.

Herstellung des Konstruktionsklebstoffes

Das Präpolymer wird mit 40 Gew.-% Kreide gemischt. Danach werden 0,01 Gew.-% DABCO T9 Katalysator zugegeben.

Die Zugscherfestigkeit des Klebstoffs wird nach DIN EN 205 und ISO 4587 auf Buche bestimmt. Man erhält

einen Durchschnittswert von > 10 MPa.

1) Essen, Deutschland
2) Köln, Deutschland
3) Air Products Polyurethan Additive, Hamburg, Deutschland

**Beispiel 2: Kennzeichnungsarmer Konstruktionsklebstoff**

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Calcilit® 6 HS | Alpha Calcit[2] | Kreide (Füllstoff) |
| PC-CAT-DBU | Performance Chemicals[3] | Katalysator (Diazabicycloundecene) |

Herstellung des Präpolymers:

Dynasylan 1505 und Vestanat HB 2540 LV werden zur Herstellung eines silanterminierten Präpolymers umgesetzt. Es wird ein Präpolymer mit einem Verhältnis der funktionellen Gruppen des Isocyanats (Isocyanat-Äquivalente) zu denen des Aminosilans (Amino-Äquivalente) von 1:1,54 hergestellt. Dazu werden 47,07 g Dynasylan 1505 eingewogen. Im Anschluss werden 30 g Vestanat HB 2640 LV derart zugegeben und untergerührt, dass die Temperatur kontrolliert werden kann.

Herstellung des Konstruktionsklebstoffes

Das Präpolymer wird mit 40 Gew.-% Kreide gemischt. Danach werden 0,01 Gew.-% PC-CAT-DBU Katalysator zugegeben.
Bestimmung der Bruchdehnung als Maß für die Elastizität:
Die Bruchdehnung wird gemäß DIN EN ISO 527-1 an Schulterstäben des Probekörpertyps 1 BA (nach DIN EN ISO 527-2) bestimmt. Nach 7 Tagen Lagerung bei Raumtemperatur erhält man eine eine Bruchdehnung von 3,7 ± 0,3 %.
Nach Lagerung gemäß Lagerungsfolge 5 der DIN EN 204 erhält man ein Zugmodul von 264 ± 40 MPa, eine Bruchspannung von 8,5 ± 0,7 MPa und eine Bruchdehnung von 7,2 ± 2,7 %.

1) Essen, Deutschland
2) Köln, Deutschland
3) Performance Chemicals, Hamburg, Deutschland

**Beispiel 3: Kennzeichnungsarmer Konstruktionsklebstoff**

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Palatinol 10-P | BASF SE[2] | Weichmacher (Bis(2-propylheptyl)phthalat) |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Dynasylan 1505 und Vestanat HB 2540 LV werden zur Herstellung eines silanterminierten Präpolymers unter Zugabe von 10 % Weichmacher umgesetzt. Es wird ein Präpolymer mit einem Verhältnis der funktionellen Gruppen des Isocyanats (Isocyanat-Äquivalente) zu denen des Aminosilans (Amino-Äquivalente) von 1:1,1 hergestellt. Dazu werden 6,14 g Weichmacher vorgelegt und anschließend 31,38 g Dynasylan 1505 eingewogen. Im Anschluss werden 30 g Vestanat HB 2640 LV derart zugegeben und untergerührt, dass die Temperatur kontrolliert werden kann.

Herstellung des Konstruktionsklebstoffes

Das Präpolymer wird mit 40 Gew.-% Kreide gemischt. Danach werden 0,01 Gew.-% PC-CAT-DBU Katalysator zugegeben.

Die Zugscherfestigkeit des Klebstoffs wird nach DIN EN 204 auf Buche bestimmt. Man erhält nach Lagerungsfolge 1 einen Durchschnittswert von > 10 MPa. Nach Lagerungsfolge 3 und 5 erhält man jeweils einen Durchschnittswert von 4 MPa.

## Patentansprüche

1. Verwendung eines Klebstoffes zum Verkleben zur mindestens stoffschlüssigen Verbindung von zwei oder mehr in Kontakt bringbaren Flächen eines Teils und/oder von zwei oder mehr Teilen zu einem aus den verbundenen Teilen bestehenden Objekt, bei der jeweils eine Oberfläche eines zu behandelnden Objekts mindestens teilweise mit dem Klebstoff beaufschlagt wird und dann mit einer anderen Oberfläche, die gegebenenfalls auch mit dem Klebstoff beaufschlagt sein kann, desselben oder eines anderen Objekts in Verbindung gebracht wird, oder Verwendung eines Beschichtungsstoffes zur Beschichtung von Substraten, **dadurch gekennzeichnet, dass** dabei ein Kleb- oder Beschichtungsstoff auf Basis silanterminierter Polymere aus Isocyanaten, die bei der Umsetzung von als erster Komponente

   a) ein oder mehreren Silanen, die als Substituenten mindestens einen hydrolysierbaren Rest und mindestens einen Substituenten mit einer gegenüber Isocyanaten reaktiven (funktionalen) Gruppe, ausgewählt aus $-NH_2$ (Amino), -NH- (sek. Amino),-SH (Mercapto), Epoxy, Isocyanato und Anhydrido aufweisen;

   und einer oder mehreren weiteren Komponenten b) ausgewählt aus

   b1) aliphatischen, aromatischen oder araliphatischen Polyisocyanaten mit durch Reaktion von Isocyanatgruppen miteinander gebildeten cyklischen Strukturen, einer Viskosität von höchstens 15000 mPa·s bei 23 °C und einem Gehalt an freien monomeren Isocyanaten von 2 oder weniger Gewichtsprozent,;
   b2) aliphatischen, aromatischen oder araliphatischen Polyisocyanaten mit Bluret-, Allophanat- oder Carbodiimid-Typ-Strukturen, einer Viskosität von höchstens 15000 mPa·s bei 23 °C und einem Gehalt an freien monomeren Isocyanaten von 2 oder weniger Gewichtsprozent; und
   b3) Präpolymeren mit einer Viskosität von 60'000 oder weniger mPa·s bei 23 °C, herstellbar aus der Reaktion von b1) und/oder b2) mit aliphatischen, aromatischen oder araliphatischen Verbindungen mit mindestens 2 gegenüber Isocyanaten reaktiven Gruppen

   erhältlich sind;
   wobei "aliphatisch" im Falle der unter b1) und b2) erwähnten Polyisocyanate bedeutet, dass die entsprechenden Polyisocyanate gesättigte Kohlenwasserstoffketten mit 1 bis 20 Kohlenstoffatomen, die geradkettig oder verzweigt sein können, oder gesättigte cyclische Reste, die mit 1 oder mehreren Alkylgruppen substituiert sein können, enthalten,
   verwendet wird,
   wobei "auf Basis" bedeutet, dass neben den silanterminierten Polymeren aus Isocyanaten weitere übliche Inhaltsstoffe in einer Menge von insgesamt bis zu 80 % vorgesehen sind,
   wobei der Kleb- oder Beschichtungsstoff ausgeführt ist (i) in Form eines wasserfreien Ein-Komponenten-Kleb- oder Beschichtungsstoffes, so dass die Aushärtung durch Luftfeuchtigkeit, Feuchtigkeit in den Objekten und/oder zugesetztes Wasser erfolgt,
   oder (ii) in Form eines Zwei-Komponenten-Kleb- oder Beschichtungsstoffes, dessen eine Komponente der Kleb- oder Beschichtungsstoff, dessen andere Komponente Wasser in freier oder in Pasten- oder Gelform ist, das dann die Aushärtung ermöglicht.

**2.** Verwendung eines Kleb- oder Beschichtungsstoffes nach Anspruch 1, **dadurch gekennzeichnet, dass** als Silan in Komponente a) solche Verwendung finden, deren hydrolysierbarer Rest oder Reste aus Halogen, Ketoximato, Amino, Aminoxy, Mercapto, Acyloxy, Aryloxy, Aralkyloxy und Alkyloxy ausgewählt sind.

**3.** Verwendung eines Kleb- oder Beschichtungsstoffes nach Anspruch 1 oder nach Anspruch 2, **dadurch gekennzeichnet, dass** als Silan in Komponente a) ein oder mehrere solche Silane Verwendung finden, die mindestens einen hydrolysierbaren Alkoxyrest und mindestens eine Amino-, sek-Amino- und/oder Mercaptogruppe tragen.

**4.** Verwendung eines Kleb- oder Beschichtungsstoffes nach einem der Ansprüche 1 bis 3, wobei die Komponenten in den Varianten b1 oder b2 jeweils eine Viskosität < 5000 mPas, in Variante b3 eine Viskosität <15000 mPas haben.

**5.** Verwendung eines Kleb- oder Beschichtungsstoffes nach Anspruch 1, **dadurch gekennzeichnet, dass** unter dem Silan in Komponente a) ein oder mehrere Silane der Formel I,

$$[R_1\text{-}X\text{-}(CH_2)_n]_p\text{-}Si(\text{-}R_2)_q \qquad (I)$$

worin
X für S oder NH oder O oder NCO oder nichts steht; wobei X nichts ist, wenn $R_1$ für Carbonsäureanhydrid steht;
$R_1$ für nichts, Wasserstoff, Cycloalkyl, Alkyl, Aminoalkyl, Epoxyalkyl, Aryl, Acyl, Carbonsäureanhydrid, Heterocyclyl oder einen Rest der Formel $-[(CH_2)_{n^*}]_{p^*}-Si(OR_2^*)_{q^*}$ steht, worin, jeweils unabhängig vom anderen Rest, $R_2^*$ eine der für $R_2$, genannten Bedeutungen hat; wobei $R_1$ Wasserstoff ist, wenn X für S steht; wobei $R_1$ Epoxyalkyl ist, wenn X für O steht; wobei $R_1$ nichts ist, wenn X für NCO steht;
$R_2$ für Alkyl oder für Alkoxy, steht, mit der Maßgabe, dass mindestens einer der Reste $R_2$ für Alkoxy steht, bzw. stehen;
n und n* unabhängig voneinander für eine positive ganze Zahl stehen;
p und p* unabhängig voneinander für 1 bis 3 stehen; und
q und q* unabhängig voneinander für 1 bis 3 stehen, mit der Maßgabe, dass die Summe aus
p bzw p* und q bzw. q* gleich 4 ist.

**6.** Verwendung eines Kleb- oder Beschichtungsstoffes nach einem der Ansprüche 1 bis 5, **dadurch gekennzeichnet, dass** unter dem oder den Silanen für Komponente a) solche mit alpha-Effekt zu verstehen sind.

**7.** Verwendung eines Kleb- oder Beschichtungsstoffes nach einem der Ansprüche 1 bis 6, **dadurch gekennzeichnet, dass** als Komponente oder Komponenten b) ein oder mehrere der folgenden vorgesehen sind:

b1*) aliphatische, aromatische oder araliphatische Polyisocyanate mit durch Reaktion von Isocyanatgruppen miteinander gebildeten cyklischen Strukturen, einer Viskosität von höchstens 5000 mPa·s bei 23 °C und einem Gehalt an freien monomeren Isocyanaten von 0,5 oder weniger Gewichtsprozent;
b2*) aliphatische, aromatische oder araliphatische Polyisocyanate mit Bluret-, Allophanat- oder Carbodiimid-Typ-Strukturen, einer Viskosität von höchstens 5000 mPa·s bei 23 °C und einem Gehalt an freien monomeren Isocyanaten von 0,5 oder weniger Gewichtsprozent; und/oder
b3*) Präpolymeren mit einer Viskosität von 15'000 oder weniger mPa·s, herstellbar aus der Reaktion von b1*) und/oder b2*) mit aliphatischen, aromatischen oder araliphatischen Verbindungen mit mindestens 2 gegenüber Isocyanaten reaktiven Gruppen.

**8.** Verwendung eines Klebstoffes nach einem der Ansprüche 1 bis 7, **dadurch gekennzeichnet, dass** als Komponente b) ein oder mehrere ausgewählt aus
b1**) aliphatischen Polyisocyanaten mit cyclischen Strukturen ausgewählt aus solchen des Uretdion-Typs, des Isocyanurat-Typs, des Uretonimin, des Iminooxadiazindion- und des Oxadiazintrion-Typs
b2**) aliphatischen Polyiisocyanaten ausgewählt aus solchen mit Bluret-, Allophanatstruktur und/oder Carbodiimid-Struktur; und
b3**) Präpolymeren mit einer Viskosität von 15'000 oder weniger mPa·s, herstellbar aus der Reaktion von b1**) und/oder b2**) mit aliphatischen, aromatischen oder araliphatischen Verbindungen mit mindestens 2 gegenüber Isocyanaten reaktiven Gruppen ausgewählt aus Amino, Imino, Hydroxy und Mercapto.
beinhaltet sind.

**9.** Verwendung eines Kleb- oder Beschichtungsstoffes nach einem der Ansprüche 1 bis 8, wobei der Kleb- oder Beschichtungsstoff weiter ein oder mehrere übliche Zusätze enthält.

10. Verwendung eines Kleb- oder Beschichtungsstoffes nach einem der Ansprüche 1 bis 9, **dadurch gekennzeichnet, dass** die Bruchdehnung bei kleiner 110 % liegt, gemessen gemäß DIN EN ISO 527-1 an Schulterstäben des Probekörpertyps 1 BA nach DIN EN ISO 527-2 nach 7 Tagen Lagerung bei Raumtemperatur.

11. Verwendung eines Kleb- oder Beschichtungsstoffes nach Anspruch 10, **dadurch gekennzeichnet, dass** die Bruchdehnung bei kleiner als 80 % liegt.

12. Verwendung eines Kleb- oder Beschichtungsstoffes nach einem der Ansprüche 1 bis 11, **dadurch gekennzeichnet, dass** die bei der Umsetzung entstehenden Verbindungen eine Molekulargewichtsvertellung derart aufweisen, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanden zusammengesetzt sind.

13. Verwendung eines Kleb- oder Beschichtungsstoffes nach einem der Ansprüche 1 bis 12, wobei bei den Varianten b1 und b2 bei Verwendung von Verbindungen mit Bluret- und/oder Isocyanatstrukturen auch ein oder mehrere andere der genannten aliphatischen, aromatischen oder araliphatischen Polyisocyanate mit cyklischen Strukturen und aliphatischen, aromatischen oder araliphatischen Polyisocyanate mit Bluret-, Allophanat- oder Carbodiimid-Strukturen zugemischt sind.

14. Verwendung eines Kleb- oder Beschichtungsstoffes nach einem der Ansprüche 1 bis 13, wobei im Falle aliphatischer Polyisocyanate diese zwei oder mehr Strukturen ausgewählt aus Strukturen des Uretdion-Typs, des Isocyanurat-Typs, des Iminooxadiazinon-Typs, des Uretonimin-Typs, des Biurettyps und des Allophanattyps, und ein oder mehrere verbleibende noch nicht umgesetzte Isocyanatgruppen tragen;
aromatischer Polyisocyanate diese zwei oder mehr Strukturen ausgewählt aus Strukturen des Uretdion-Typs, des Isocyanurat-Typs, des Uretonimin-Typs, des Iminooxadiazinontyps, des Biurettyps und des Allophanattyps, und ein oder mehrere noch verbleibende nicht umgesetzte Isocyanatgruppen tragen; oder
aromatisch-aliphatischer Polyisocyanate zwei oder mehr Strukturen ausgewählt aus Strukturen des des Uretdion-Typs, des Isocyanurat-Typs, des Uretonimin-Typs, des Iminooxadiazinontyps, des Oxadiazintriontyps, des Biurettyps, des Allophanattyps und des Carbodiimidtyps, und ein oder mehrere noch nicht umgesetzte Isocyanatgruppen tragen.

15. Verwendung eines Klebstoffes nach einem der Ansprüche 1 bis 14 zum Verkleben im Konstruktions- und Baubereich.

16. Verwendung eines Beschichtungsstoffes nach einem der Ansprüche 1 bis 14 zur Beschichtung von metallischen, organischen und/oder mineralischen Substraten.

17. Verwendung nach Anspruch 15 zum Verkleben oder nach Anspruch 16 zum Beschichten im Bereich der Herstellung von Land-, Wasser- oder Luftfahrzeugen, im Bereich des Sanitärwesens, im Bereich der Elektroindustrie, im Bereich der Herstellung von Produkten mit Kunststoffteilen, in der Möbelindustrie und/oder in der Bauindustrie.

18. Verwendung nach Anspruch 15 zum Verkleben von Böden, Rohren, Platten oder Steinen.

19. Verwendung nach einem der Ansprüche 1 bis 18 eines Kleb- oder Beschichtungsstoffes, wobei neben den silanterminierten Polymere aus Isocyanaten weitere Inhaltsstoffe in einer Menge von insgesamt bis zu 80 Gew.-% vorliegen.

20. Verwendung nach Anspruch 19, wobei die weiteren Inhaltsstoffe in einer Menge von Insgesamt zwischen 0,01 und 50 Gew.-% vorliegen.

21. Verwendung eines Kleb- oder Beschichtungsstoffes nach Anspruch 1, wobei unter b1) oder b2) der Gehalt an freien monomeren Isocyanaten bei 0,5 oder weniger Gewichtsprozent liegt.

22. Verwendung nach einem der Ansprüche 1 bis 21, wobei die verwendeten Kleb- oder Beschichtungsstoffe keinen Gehalt an Monomeren oder Molekülen mit freien Isocyanatgruppen aufweisen.

## Claims

1. Use of an adhesive for adhesive bonding for at least material-bonded connection of two or more surfaces of a part

that are arranged to be brought into contact and/or of two or more parts to form an object consisting of the connected parts, in which the adhesive is applied to at least a portion of a surface of an object to be treated and that surface is then joined to another surface, to which the adhesive may also have been applied, of the same object or of a different object, or use of a coating material for coating substrates, **characterised in that** there is used an adhesive or coating material based on silane-terminated polymers of isocyanates obtainable in the reaction of, as first component,

a) one or more silanes having as substituents at least one hydrolysable radical and at least one substituent having a (functional) group reactive towards isocyanates, selected from $-NH_2$ (amino), -NH- (sec.-amino), -SH (mercapto), epoxy, isocyanato and anhydrido;

and one or more further components b) selected from

b1) aliphatic, aromatic or araliphatic polyisocyanates having cyclic structures formed by reaction of isocyanate groups with one another, a viscosity of at most 15 000 mPa·s at 23°C and a content of free monomeric isocyanates of 2 % by weight or less;
b2) aliphatic, aromatic or araliphatic polyisocyanates having structures of the biuret, allophanate or carbodiimide type, a viscosity of at most 15 000 mPa·s at 23°C and a content of free monomeric isocyanates of 2 % by weight or less; and
b3) prepolymers having a viscosity of 60 000 mPa·s or less at 23°C, obtainable from the reaction of b1) and/or b2) with aliphatic, aromatic or araliphatic compounds having at least two groups reactive towards isocyanates;

wherein "aliphatic" in the case of the polyisocyanates mentioned under b1) and b2) means that the polyisocyanates in question contain saturated hydrocarbon chains having from 1 to 20 carbon atoms, which may be straight-chain or branched, or saturated cyclic radicals which may be substituted by one or more alkyl groups,
wherein "based on" means that, in addition to the silane-terminated polymers of isocyanates, further customary ingredients are provided in an amount of in total up to 80%,
wherein the adhesive or coating material is (i) in the form of a water-free one-component adhesive or coating material, so that the curing is effected by means of atmospheric moisture, moisture in the objects and/or added water, or (ii) in the form of a two-component adhesive or coating material, one component of which is the adhesive or coating material and the other component of which is water in free form or in paste or gel form, which then enables curing to take place.

2. Use of an adhesive or coating material according to claim 1, **characterised in that** there is used as silane in component a) a silane of which the hydrolysable radical or radicals are selected from halogen, ketoximato, amino, aminoxy, mercapto, acyloxy, aryloxy, aralkyloxy and alkyloxy.

3. Use of an adhesive or coating material according to claim 1 or according to claim 2, **characterised in that** there is used as silane in component a) one or more silanes that carry at least one hydrolysable alkoxy radical and at least one amino, sec.-amino and/or mercapto group.

4. Use of an adhesive or coating material according to any one of claims 1 to 3, wherein the components in variants b1 and b2 each have a viscosity < 5000 mPa·s, and in variant b3 a viscosity < 15 000 mPa·s.

5. Use of an adhesive or coating material according to claim 1, **characterised in that** the silane in component a) is to be understood as being one or more silanes of formula I

$$[R_1X-(CH_2)_n]_p-Si(-R_2)_q \quad (I)$$

wherein
X denotes S or NH or O or NCO or nothing; X being nothing when $R_1$ is carboxylic acid anhydride;
$R_1$ denotes nothing, hydrogen, cycloalkyl, alkyl, aminoalkyl, epoxyalkyl, aryl, acyl, carboxylic acid anhydride, heterocyclyl or a radical of the formula $-[(CH_2)_{n^*}]_{p^*}-Si(OR_2^*)_{q^*}$ wherein, in each case independently of the other radical, $R_2^*$ has one of the meanings given for $R_2$; $R_1$ being hydrogen when X is S; $R_1$ being epoxyalkyl when X is O; $R_1$ being nothing when X is NCO;
$R_2$ denotes alkyl or alkoxy, with the proviso that at least one of the radicals $R_2$ is or are alkoxy;
n and n* each independently of the other denote a positive integer;
p and p* each independently of the other denote from 1 to 3; and

q and q* each independently of the other denote from 1 to 3, with the proviso that the sum of p and q is equal to 4 and that of p* and q* is equal to 4.

6. Use of an adhesive or coating material according to any one of claims 1 to 5, **characterised in that** the silane or silanes for component a) are to be understood as being those having an alpha effect.

7. Use of an adhesive or coating material according to any one of claims 1 to 6, **characterised in that** as component or components b) there are provided one or more of the following:

b1*) aliphatic, aromatic or araliphatic polyisocyanates having cyclic structures formed by reaction of isocyanate groups with one another, a viscosity of at most 5000 mPa·s at 23°C and a content of free monomeric isocyanates of 0.5 % by weight or less;
b2*) aliphatic, aromatic or araliphatic polyisocyanates having structures of the biuret, allophanate or carbodiimide type, a viscosity of at most 5000 mPa·s at 23°C and a content of free monomeric isocyanates of 0.5 % by weight or less; and/or
b3*) prepolymers having a viscosity of 15 000 mPa·s or less, obtainable from the reaction of b1*) and/or b2*) with aliphatic, aromatic or araliphatic compounds having at least two groups reactive towards isocyanates.

8. Use of an adhesive according to any one of claims 1 to 7, **characterised in that** as component b) there are included one or more selected from:

b1**) aliphatic polyisocyanates having cyclic structures selected from those of the uretdione type, the isocyanurate type, the uretonimine type, the iminooxadiazinedione type and the oxadiazinetrione type;
b2**) aliphatic polyisocyanates selected from those having a biuret structure, allophanate structure and/or carbodiimide structure; and
b3**) prepolymers having a viscosity of 15 000 mPa·s or less, obtainable from the reaction of b1**) and/or b2**) with aliphatic, aromatic or araliphatic compounds having at least two groups reactive towards isocyanates, selected from amino, imino, hydroxy and mercapto.

9. Use of an adhesive or coating material according to any one of claims 1 to 8, wherein the adhesive or coating material further contains one or more customary additives.

10. Use of an adhesive or coating material according to any one of claims 1 to 9, **characterised in that** the elongation at break is less than 110 %, measured in accordance with DIN EN ISO 527-1 using shouldered bars of test specimen type 1 BA in accordance with DIN EN ISO 527-2 after storage for 7 days at room temperature.

11. Use of an adhesive or coating material according to claim 10, **characterised in that** the elongation at break is less than 80 %.

12. Use of an adhesive or coating material according to any one of claims 1 to 11, **characterised in that** the compounds formed in the reaction have a molecular weight distribution such that no single molecular species is present in an amount greater than 50 % by weight and at the same time more than 50 % by weight of the chains are composed of at least 3 + 1 covalently bonded monomer units/reactants.

13. Use of an adhesive or coating material according to any one of claims 1 to 12, wherein, in the case of variants b1 and b2, when compounds having biuret and/or isocyanate structures are used there are also added one or more others of the mentioned aliphatic, aromatic or araliphatic polyisocyanates having cyclic structures and aliphatic, aromatic or araliphatic polyisocyanates having biuret, allophanate or carbodiimide structures.

14. Use of an adhesive or coating material according to any one of claims 1 to 13, wherein
in the case of aliphatic polyisocyanates the latter carry two or more structures selected from structures of the uretdione type, the isocyanurate type, the iminooxadiazinone type, the uretonimine type, the biuret type and the allophanate type, and one or more residual unreacted isocyanate groups;
in the case of aromatic polyisocyanates the latter carry two or more structures selected from structures of the uretdione type, the isocyanurate type, the uretonimine type, the iminooxadiazinone type, the biuret type and the allophanate type, and one or more residual unreacted isocyanate groups; or
in the case of aromatic-aliphatic polyisocyanates the latter carry two or more structures selected from structures of the uretdione type, the isocyanurate type, the uretonimine type, the iminooxadiazinone type, the oxadiazinetrione

type, the biuret type, the allophanate type and the carbodiimide type, and one or more unreacted isocyanate groups.

**15.** Use of an adhesive according to any one of claims 1 to 14 for adhesive bonding in the construction and building sector.

**16.** Use of a coating material according to any one of claims 1 to 14 for coating metallic, organic and/or mineral substrates.

**17.** Use according to claim 15 for adhesive bonding or according to claim 16 for coating in the manufacture of land vehicles, water craft or aircraft, in the sanitation sector, in the electrical industry, in the manufacture of products having plastics parts, in the furniture industry and/or in the building industry.

**18.** Use according to claim 15 for adhesive bonding of floors, pipes, panels or stone.

**19.** Use according to any one of claims 1 to 18 of an adhesive or coating material, wherein, in addition to the silane-terminated polymers of isocyanates, further ingredients are present in an amount of in total up to 80 % by weight.

**20.** Use according to claim 19, wherein the further ingredients are present in an amount of in total between 0.01 and 50 % by weight.

**21.** Use of an adhesive or coating material according to claim 1, wherein under b1) or b2) the content of free monomeric isocyanates is 0.5 % by weight or less.

**22.** Use according to any one of claims 1 to 21, wherein the adhesives or coating materials used have no content of monomers or molecules having free isocyanate groups.

## Revendications

**1.** Utilisation d'une colle pour le collage en vue de relier par liaison de matière deux surfaces ou plus, pouvant être mises en contact, d'une partie et/ou de deux parties ou plus en un objet composé des parties reliées, dans laquelle respectivement une surface d'un objet à traiter est chargée au moins partiellement de la colle puis est mise en liaison avec une autre surface, qui peut éventuellement aussi être chargée de la colle, de celui-ci ou d'un autre objet, ou utilisation d'une substance de revêtement pour revêtir des substrats, **caractérisée en ce que** l'on utilise à cet égard une colle ou une substance de revêtement à base de polymères d'isocyanates terminés par un silane que l'on peut obtenir lors de la conversion en tant que premier composant de

a) un ou plusieurs silanes qui présentent comme substituants au moins un radical hydrolysable et au moins un substituant présentant un groupe (fonctionnel) réactif vis-à-vis des isocyanates, sélectionné parmi $-NH_2$ (amino), -NH- (amino sec.), -SH (mercapto), époxy, isocyanato et anhydrido,

et d'un ou de plusieurs autres composants b) sélectionnés parmi

b1) des polyisocyanates aliphatiques, aromatiques ou araliphatiques ayant des structures cycliques formées par réaction de groupes isocyanates ensemble, une viscosité d'au plus 15 000 mPa.s à 23 °C et une teneur en isocyanates monomères libres de 2 % en poids ou moins ;
b2) des polyisocyanates aliphatiques, aromatiques ou araliphatiques présentant des structures de type biuret, allophanate ou carbodiimide, une viscosité d'au plus 15000 mPa.s à 23 °C et une teneur en isocyanates monomères libres de 2 % en poids ou moins ; et
b3) des prépolymères ayant une viscosité de 60 000 mPa.s ou moins à 23 °C, pouvant être obtenus par la réaction de b1) et/ou b2) avec des composés aliphatiques, aromatiques ou araliphatiques ayant au moins 2 groupes réactifs vis-à-vis des isocyanates ;

où « aliphatique », dans le cas des polyisocyanates mentionnés en b1) et b2) signifie que les polyisocyanates correspondants contiennent des chaînes hydrocarbure saturé comportant 1 à 20 atomes de carbone, qui peuvent être linéaires ou ramifiées, ou des radicaux cycliques saturés qui peuvent être substitués par 1 ou plusieurs groupes alkyle,
où « à base de » signifie qu'en plus des polymères d'isocyanate terminés par un silane, on prévoit d'autres ingrédients usuels dans une quantité allant au total jusqu'à 80 %,
où la colle ou la substance de revêtement est exécutée (I) sous la forme d'une colle ou d'une substance de revêtement

anhydre à un composant de façon telle que le durcissement se produit par l'humidité atmosphérique, l'humidité dans les objets et/ou l'eau ajoutée, ou (II) sous la forme d'une colle ou d'une substance de revêtement à deux composants dont un composant est la colle ou la substance de revêtement, dont l'autre composant est de l'eau sous forme libre ou sous la forme d'une pâte ou d'un gel, et qui permet ensuite le durcissement.

2. Utilisation d'une colle ou d'une substance de revêtement selon la revendication 1, **caractérisée en ce que** sont utilisés comme silane dans le composant (a) ceux dont le radical ou les radicaux hydrolysable(s) sont sélectionnés parmi un halogène, un groupe cétoximato, amino, aminoxy, mercapto, acyloxy, aryloxy, aralkyloxy et alkyloxy.

3. Utilisation d'une colle ou d'une substance de revêtement selon la revendication 1 ou selon la revendication 2, **caractérisée en ce que** l'on utilise comme silane dans le composant a) un ou plusieurs silanes qui portent au moins un radical alcoxy hydrolysable et au moins un groupe amino, amino sec., et/ou mercapto.

4. Utilisation d'une colle ou d'une substance de revêtement selon l'une des revendications 1 à 3, dans laquelle les composants dans les variantes b1 ou b2 ont respectivement une viscosité < 5000 mPa.s et dans la variante b3 une viscosité < 15 000 mPa.s.

5. Utilisation d'une colle ou d'une substance de revêtement selon la revendication 1, **caractérisée en ce que** l'on comprend sous le terme silane du composant a) un ou plusieurs silanes de formule 1

$$[R_1\text{-}X\text{-}(CH_2)_n\text{-}]_p\text{-}Si(\text{-}R_2)_q \qquad (I)$$

dans laquelle
X représente S ou NH ou O ou NCO ou rien ; où X représente rien lorsque $R_1$ est un anhydride d'acide carbonique ;
$R_1$ représente rien, de l'hydrogène, un groupe cycloalkyle, alkyle, aminoalkyle, époxyalkyle, aryle, acyle, anhydride d'acide carbonique, hétérocyclyle ou un radical de formule $-[(CH_2)_{n^*}]_p\text{-}Si\text{-}(OR_{2^*})_q$, dans laquelle, respectivement indépendamment de tout autre radical, $R_{2^*}$ a une des significations données pour $R_2$ ; où $R_1$ est l'hydrogène quand X est S ; où $R_1$ est un groupe époxyalkyle quand X est O ; où $R_1$ est rien quand W est NCO ;
$R_2$ représente un groupe alkyle ou alcoxy, à la condition qu'au moins un des radicaux $R_2$ soit un groupe alcoxy ;
n et n* représentent indépendamment l'un de l'autre un nombre entier positif ; p et p* représentent indépendamment l'un de l'autre un nombre compris entre 1 et 3 ; et
q et q* représentent indépendamment l'un de l'autre un nombre compris entre 1 et 3, à la condition que la somme de p ou p* et q ou q* soit égale à 4.

6. Utilisation d'une colle ou d'une substance de revêtement selon l'une des revendications 1 à 5, **caractérisée en ce que** l'on entend par silane ou silanes pour le composant a) ceux ayant un effet alpha.

7. Utilisation d'une colle ou d'une substance de revêtement selon l'une des revendications 1 à 6, **caractérisée en ce que** sont prévus comme composant ou composants b) un ou plusieurs parmi les suivants :

b1*) polyisocyanates aliphatiques, aromatiques ou araliphatiques présentant des structures cycliques formées par la réaction de groupes isocyanate ensemble, une viscosité d'au plus 5000 mPa.s à 23 °C et une teneur en isocyanates monomères libres de 0,5 % en poids ou moins ;
b2*) des polyisocyanates aliphatiques, aromatiques ou araliphatiques présentant des structures de type biuret, allophanate ou carbodiimide, une viscosité d'au plus 5000 mPa.s à 23 °C et une teneur en isocyanates monomères libres de 0,5 % en poids ou moins ;
b3) des prépolymères ayant une viscosité de 15 000 mPa.s ou moins, pouvant être obtenus par la réaction de b1*) et/ou b2*) avec des composés aliphatiques, aromatiques ou araliphatiques ayant au moins 2 groupes réactifs vis-à-vis des isocyanates.

8. Utilisation d'une colle selon l'une des revendications 1 à 7, **caractérisée en ce que** sont prévus en tant que composant b) un ou plusieurs parmi les suivants :

b1**) polyisocyanates aliphatiques présentant des structures cycliques sélectionnées parmi celles du type uretdione, du type isocyanurate, du type urétonimine, du type iminooxadiazinedione et du type oxadiazinetrione ;
b2*) des polyisocyanates aliphatiques sélectionnés parmi ceux de structure biuret, allophanate et/ou carbodiimide ;
b3) des prépolymères ayant une viscosité de 15 000 mPa.s ou moins, pouvant être obtenus par la réaction de

b1**) et/ou b2**) avec des composés aliphatiques, aromatiques ou araliphatiques ayant au moins 2 groupes réactifs vis-à-vis des isocyanates sélectionnés parmi des groupes amino, imino, hydroxy et mercapto.

**9.** Utilisation d'une colle ou d'une substance de revêtement selon l'une des revendications 1 à 8, dans laquelle la colle ou la substance de revêtement contient en outre un ou plusieurs additifs usuels.

**10.** Utilisation d'une colle ou d'une substance de revêtement selon l'une des revendications 1 à 9, **caractérisée en ce que** l'allongement à la rupture est inférieur à 110 %, mesuré selon DIN EN ISO 527-1 au niveau d'une éprouvette à épaulement de type 1 BA selon DIN ISO 527-2 après 7 jours de stockage à la température ambiante.

**11.** Utilisation d'une colle ou d'une substance de revêtement selon la revendication 10, **caractérisée en ce que** l'allongement à la rupture est inférieur à 80 %.

**12.** Utilisation d'une colle ou d'une substance de revêtement selon l'une des revendications 1 à 11, **caractérisée en ce que** les composés formés lors de la conversion présentent une répartition du poids moléculaire telle qu'aucune espèce moléculaire n'est présente à raison de plus de 50 % en poids et que simultanément plus de 50 % en poids des chaînes sont formées d'au moins 3 + 1 motifs monomères/réactants liés de façon covalente.

**13.** Utilisation d'une colle ou d'une substance de revêtement selon l'une des revendications 1 à 12, dans laquelle pour les variantes b1 et b2 lors de l'utilisation de composés ayant des structures de type biuret et/ou isocyanate, on ajoute aussi en mélange un ou plusieurs autres des polyisocyanates aliphatiques, aromatiques ou araliphatiques nommés ayant des structures cycliques et des polyisocyanates aliphatiques, aromatiques ou araliphatiques ayant des structures de type biuret, allophanate ou carbodiimide.

**14.** Utilisation d'une colle ou d'une substance de revêtement selon l'une des revendications 1 à 13, dans laquelle dans le cas
des polyisocyanates aliphatiques, ceux-ci présentent deux structures ou plus sélectionnées parmi des structures du type uretdione, du type isocyanurate, du type urétonimine, du type biuret et du type allophanate, et un ou plusieurs groupes isocyanate restants non encore convertis ;
des polyisocyanates aromatiques, ceux-ci présentent deux structures ou plus sélectionnées parmi les structures du type uretdione, du type isocyanurate, du type urétonimine, du type iminooxadiazinone, du type biuret et du type allophanate, et un ou plusieurs groupes isocyanate restants non encore convertis ;
des polyisocyanates aromatiques-aliphatiques, ceux-ci présentent deux structures ou plus sélectionnées parmi les structures du type uretdione, du type isocyanurate, du type urétonimine, du type iminooxadiazinone, du type oxadiazinetrione, du type biuret, du type allophanate et du type carbodiimide, et un ou plusieurs groupes isocyanate non encore convertis.

**15.** Utilisation d'une colle selon l'une des revendications 1 à 14 pour le collage dans le secteur de la construction et du bâtiment.

**16.** Utilisation d'une substance de revêtement selon l'une des revendications 1 à 14 pour revêtir des substrats métalliques, organiques et/ou minéraux.

**17.** Utilisation selon la revendication 15 pour le collage ou selon la revendication 16 pour le revêtement dans le secteur de la construction de véhicules terrestres, de navires et d'avions, dans le secteur des services de santé, dans le secteur de l'industrie électrotechnique, dans le secteur de la fabrication de produits comportant des pièces plastiques, dans l'industrie du meuble et/ou dans l'industrie du bâtiment.

**18.** Utilisation selon la revendication 15 pour coller des sols, des tubes, des plaques ou des pierres.

**19.** Utilisation selon l'une des revendications 1 à 18 d'une colle ou d'une substance de revêtement, dans laquelle en plus des polymères terminés par un silane issus d'isocyanates sont présents d'autres ingrédients dans une quantité allant au total jusqu'à 80 % en poids.

**20.** Utilisation selon la revendication 19, dans laquelle les autres ingrédients sont présents dans une quantité comprise au total entre 0,01 et 50 % en poids.

**21.** Utilisation d'une colle ou d'une substance de revêtement selon la revendication 1, dans laquelle sous b1) ou b2),

la teneur en isocyanates monomères libres est de 0,5 % en poids ou moins.

**22.** Utilisation selon l'une des revendications 1 à 21, dans laquelle les colles ou substances de revêtement utilisées ne présentent pas de teneur en monomères ou molécules ayant des groupes isocyanate libres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008021221
- DE 102004022150
- DE 602004012439 T2
- US 20090053411 A
- WO 2005105939 A
- EP 2014692 A
- WO 03054049 A
- EP 1273640 A
- DE 102007013262
- WO 2008043722 A
- EP 1013686 A
- EP 0913402 A
- EP 0000194 A
- EP 0531820 A
- DE 2616416
- EP 0010589 A
- US 3124605 A
- US 3358010 A
- US 3644490 A
- US 3769318 A
- US 4160080 A
- US 4177342 A
- US 5124427 A
- US 5208334 A
- US 5235018 A
- WO 02079341 A
- WO 02079293 A


### In der Beschreibung aufgeführte Nicht-Patentliteratur


- **SIGGIA, S. ; J. G. HANNA.** *Anal. Chem.,* 1948, vol. 20, 1084